Europäisches Patentamt

European Patent Office

Office européen des brevets

(19)

(11) Veröffentlichungsnummer: **0 290 787 B1**

(12) # EUROPÄISCHE PATENTSCHRIFT

(45) Veröffentlichungstag der Patentschrift: **05.08.92**

(21) Anmeldenummer: **88105591.7**

(22) Anmeldetag: **08.04.88**

(51) Int. Cl.⁵: **F16L 55/04**, F02M 37/00, F17D 1/20

(54) Dämpferelement für pulsierende Flüssigkeitsströmungen.

(30) Priorität: **09.05.87 DE 3715581**

(43) Veröffentlichungstag der Anmeldung:
**17.11.88 Patentblatt 88/46**

(45) Bekanntmachung des Hinweises auf die
Patenterteilung:
**05.08.92 Patentblatt 92/32**

(84) Benannte Vertragsstaaten:
**AT DE ES FR GB IT**

(56) Entgegenhaltungen:
**EP-A- 153 695       AT-B- 216 290**
**DE-A- 2 716 176     DE-A- 3 326 995**
**DE-A- 3 421 007     US-A- 939 551**
**US-A- 3 815 744     US-A- 3 853 147**

(73) Patentinhaber: **ROBERT BOSCH GMBH**
**Postfach 30 02 20**
**W-7000 Stuttgart 30(DE)**

(72) Erfinder: **Bosch, Franz-Ulrich, Dipl.-Ing.**
**Eduard-Steinle-Strasse 36**
**W-7000 Stuttgart 75(DE)**
Erfinder: **Müller, Willi**
**Wiesenstrasse 38**
**W-7247 Sulz-Sigmarswangen(DE)**

EP 0 290 787 B1

## Beschreibung

Stand der Technik

Die Erfindung geht aus von einem Dämpferelement für pulsierende Flüssigkeitsströmungen nach dem Oberbegriff des Anspruchs 1.

Es ist schon ein solches Dämpferelement für pulsierende Flüssigkeitsströmungen aus der DE-A-34 21 007 bekannt, das zur Dämpfung von Schwingungen bzw. Geräuschen in das Gehäuse eines Kraftstoff-Leitungsfilters eingebaut ist. Das Dämpferelement besteht im wesentlichen aus einem geschlossenen Strömungskanal in Form eines etwa spiralförmig verlaufenden Rohres, dessen gekrümmte Bahn etwa über 360 Winkelgrade geführt ist. Der Abbau der Flüssigkeitsschwingungen wird hier durch Strömungsumlenkung und vorwiegend dadurch erreicht, daß schwingende Wände des Strömungskanals von der außen angrenzenden Flüssigkeit gedämpft werden. Dieses Dämpferelement baut zwar einfach und kompakt, ist aber in seiner Dämpfungswirkung begrenzt, so daß es in einer Reihe von Anwendungsfällen höheren Anforderungen an die Schwingungsdämpfung nicht ausreichend gerecht wird. Zudem arbeitet das Dämpferelement mit einem einzelnen, sehr langen Kanal, wodurch eine unerwünschte Erhöhung des Durchflußwiderstandes im Dämpferelement und damit im Filter eintreten kann.

Ferner ist aus der DE-B-27 25 787 ein Flüssigkeitsfilter mit einem in seinem Gehäuse angeordneten Dämpferelement bekannt, wobei als dämpfende Mittel eine federbelastete Membran vorgesehen ist, die dem einströmenden Flüssigkeitsstrom unmittelbar gegenüberliegt. Damit lassen sich zwar gute Dämpfungseigenschaften erreichen, jedoch erfordert das Dämpferelement einen relativ großen Aufwand, zumal die Feder in einem abgedichteten, gasgefüllten Raum liegen muß.

Weiterhin ist aus der EP-A-0 153 695 eine Dämpfungseinrichtung bekannt, die zur Dämpfung von Schwingungen in Gastsrömen dient. Bei einer Ausführungsart ragen in ein zylindrisches Gehäuse auf dessen Längsachse von den Stirnseiten her zwei rohrförmige Stutzen in das Innere des Gehäuses. An den freien Enden beider Stutzen im Gehäuseinneren sind die Öffnungen radial zur Längsachse angeordnet, so daß die Strömung in jedem Rohrstutzen um 90° umgelenkt und in zwei gleiche Teilströme zerlegt wird. Die Fluidströmung durchströmt hier nacheinander den zulaufseitigen Rohrstutzen, so daß hier zwei radiale Teilströme in einem Knotenpunkt einer Fluid-Längsschwingung im Gehäuseinneren liegen. Nachteilig bei dieser Dämpfungseinrichtung ist, daß sich diese Lehre zur Schwingungsdämpfung von Gasströmen nicht ohne weiteres auf Flüssigkeitsströme übertragen läßt und hier der eingangs- und der ausgangsseitige Rohrstutzen zueinander in Serie geschaltet sind.

Vorteile der Erfindung

Das erfindungsgemäße Dämpferelement für pulsierende Flüssigkeits-Strömungen mit den kennzeichnenden Merkmalen des Hauptanspruchs hat demgegenüber den Vorteil, daß es unter Beibehaltung einer einfachen und kompakten Bauweise eine wirksamere Dämpfung der Flüssigkeitsschwingungen erlaubt und damit die Geräusche in Kraftstoffversorgungssystemen für Verbrennungsmotoren von Kraftfahrzeugen erheblich reduziert werden. Der Abbau von Flüssigkeitsschwingungen läßt sich dabei durch mehrere parallel geschaltete, relativ kurze und gerade geführte Strömungskanäle erreichen, welche die ankommende pulsierende Flüssigkeitsströmung soweit aufteilt, umlenkt und in Teilströme mit unterschiedlichen Strömungsgeschwindigkeiten und Volumenströmen zersetzt, daß trotz einem relativ kleinen Durchflußwiderstand ein wirksamer Schwingungsabbau und damit eine Geräuschdämpfung ermöglicht wird. Das Dämpferelement ist billig herstellbar und eignet sich durch seine platzsparende Bauweise zur Ausrüstung bei Flüssigkeitsfiltern, insbesondere in Leitungsfilterbauart.

Durch die in den Unteransprüchen aufgeführten Maßnahmen sind vorteilhafte Weiterbildungen und Verbesserungen des im Anspruch 1 angegebenen Dämpferelements möglich. Die Wirkung des Dämpferelements läßt sich besonders vorteilhaft beeinflußen, wenn es gemäß den Ansprüchen 2 bis 4 ausgebildet wird, wodurch eine optimale Dämpfungswirkung erzielbar ist. Besonders zweckmäßig ist eine Ausgestaltung nach Anspruch 5 und 6, wenn das Dämpferelement in einem Flüssigkeitsfilter eingesetzt wird; durch seine platzsparende Bauweise kann es dabei leicht zwischen den Stirnwänden von Filtergehäuse und Filtereinsatz angeordnet werden. Weitere vorteilhafte Ausgestaltungen ergeben sich aus den übrigen Ansprüchen, die vor allem eine einfache und billige Bauweise sowie einen wirksamen Schwingungsabbau unterstützen.

Zeichnung

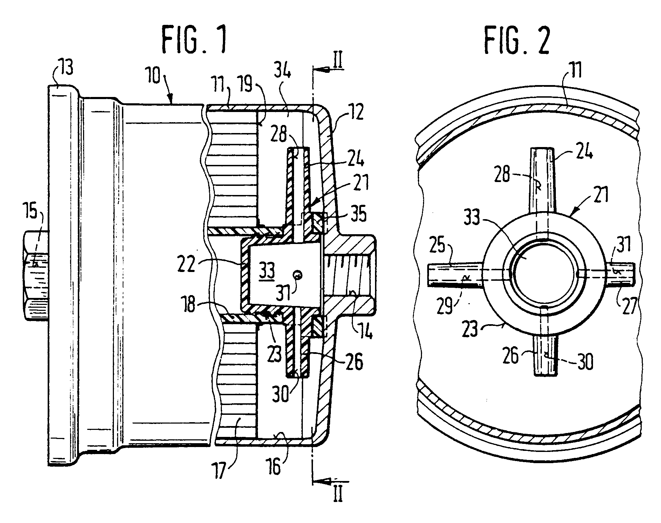

Ein Ausführungsbeispiel der Erfindung ist in der Zeichnung dargestellt und in der nachfolgenden Beschreibung näher erläutert. Es zeigen Figur 1 einen teilweisen Längsschnitt durch ein Flüssigkeitsfilter mit eingebautem Dämpferelement und Figur 2 einen Querschnitt nach II-II in Figur 1.

Beschreibung des Ausführungsbeispiels

Die Figur 1 zeigt einen teilweisen Längsschnitt durch ein Flüssigkeitsfilter 10, dessen Gehäuse 11 an einander gegenüberliegenden Stirnseiten 12 und 13 eine Einlaßöffnung 14 bzw. eine Auslaßöffnung 15 aufweist.

Das Gehäuse 11 nimmt in seinem Innenraum 16 einen Filtereinsatz 17 auf, das hier als axial durchströmtes Wickelfilterelement mit einem Mittelrohr 18 ausgebildet ist. Im Innenraum 16 ist zwischen der Stirnseite 12 des Gehäuses 11 und einer Stirnseite 19 des Filtereinsatzes 17 ein Dämpferelement 21 angeordnet, das strömungsmäßig auf der Einlaßseite des Flüssigkeitsfilters 10 zwischen die Einlaßöffnung 14 und den Filtereinsatz 17 geschaltet ist.

Das Dämpferelement 21 besteht im wesentlichen aus einer becherförmigen Kappe 22, an dessen äußerer Mantelfläche 23 vier radial nach außen ragende, rohrförmige Stutzen 24 bis 27 angebaut sind. Die vier Stutzen 24 bis 27 liegen in derselben radialen Ebene und nehmen jeweils einen Strömungskanal 28 bis 31 auf, die jeweils als durchgehende, gerade verlaufende Bohrungen ausgebildet sind.

Wie die Figur 2 näher zeigt, bauen die vier Stutzen 24 bis 27 unterschiedlich lang, wobei ihre Länge vom ersten Stutzen 24 bis zum vierten Stutzen 27 hin im Uhrzeigersinn gesehen gleichmäßig abnimmt. Dementsprechend nimmt auch die Länge vom ersten Strömungskanal 28 zum vierten Strömungskanal 31 hin gleichmäßig ab. Ferner ist der Durchflußquerschnitt der Strömungskanäle 28 bis 31 unterschiedlich gewählt, wobei der erste Strömungskanal 28 den größten Querschnitt aufweist und dieser regelmäßig bis zum kleinsten Querschnitt des vierten Strömungskanals 31 abnimmt. Die becherförmige Kappe 22 des Dampferelements 21 ist zugleich als dichtende Verschlußkappe für das Mittelrohr 18 ausgebildet und formt auf diese Weise eine der Einlaßöffnung 14 unmittelbar gegenüberliegende Einlaßkammer 33, von der die vier Strömungskanäle 28 bis 31 sternförmig in eine Zulaufkammer 34 führen, die zwischen der Stirnseite 12 des Gehäuses 11 und der Stirnseite 19 am Filtereinsatz 17 ausgebildet ist. Ein zwischen Gehäuse 11 und Dämpferelement 21 angeordneter Dichtring 35 trennt die Einlaßkammer 33 von der Zulaufkammer 34. Zugleich vermindert dieser Dichtring 35 die Übertragung von Schwingungen vom Dämpferelement 21 auf das Gehäuse 11.

Beim Betrieb von Kraftstoffversorgungssystemen für Verbrennungsmotoren von Kraftfahrzeugen wird der zu reinigende Flüssigkeitsstrom dem Flüssigkeitsfilter 10 an der Einlaßöffnung 14 zugeführt. Der Kraftstoff durchströmt anschließend das Dämpferelement 21 und den Filtereinsatz und fließt anschließend über die Auslaßöffnung 15 weiter. Der ankommende pulsierende Flüssigkeitsstrom, dessen Schwingungen wesentlich von der Elektrokraftstoffpumpe verursacht werden, erfährt beim Durchströmen der vier parallel geschalteten Strömungskanäle 28 bis 31 einen wesentlichen Abbau der Flüssigkeitsschwingungen, wodurch auch die auftretenden Geräusche verringert werden. Die Strömungskanäle 28 bis 31 arbeiten dabei wie parallelgeschaltete Drosselstellen, welche einen Abbau der Druckschwingungen bewirken. Durch die Abstimmung der Anzahl der Strömungskanäle, deren Lage, deren Länge und deren Querschnittsgröße aufeinander, kann die schwingungsabbauende Wirkung des Dämpferelements 21 in vorteilhafter Weise auf besonders störende Frequenzbereiche gerichtet werden. Durch die Ausbildung und Lagerung des Dämpferelements 21 zwischen Mittelrohr 18 und Gehäusestirnwand 12 wird eine störende Schwingungsübertragung vom Dämpferelement 21 auf das Gehäuse 11 weitgehend unterdrückt. Das einfach und billig bauende Dämpferelement 21 läßt sich durch seine platzsparende Bauweise in der Zulaufkammer 34 des Flüssigkeitsfilters 10 ohne weiteres unterbringen.

Selbstverständlich sind an dem gezeigten Ausführungsbeispiel Änderungen möglich. So kann die Anzahl der parallel geschalteten Strömungskanäle auf die jeweiligen Gegebenheiten abgestimmt werden, ebenso deren unterschiedliche Länge und deren Durchflußquerschnitte. Auch können die rohrförmigen Stutzen auf den Dämpferelementen über den Umfang ungleichmäßig verteilt werden. Auch können auf die rohrförmigen Stutzen kurze Gummischläuche aufgesteckt werden, welche die Dämpfungswirkung noch verstärken.

## Patentansprüche

1. Dämpfereinrichtung für pulsierende Flüssigkeitsströmungen insbesondere zur Glättung und zum Abbau von in Kraftstoffversorgungssystemen für Verbrennungsmotoren von Kraftfahrzeugen auftretenden Druckschwingungen, mit einem eine Einlaß- und eine Auslaßöffnung aufweisenden, von der Flüssigkeit durchströmten, geschlossenen Gehäuse, in dem ein Dämpferelement angeordnet ist, das einen von der Einlaßöffnung in das Gehäuseinnere verlaufenden, geschlossenen Stromungskanal aufweist, der mindestens teilweise von einem rohrförmigen Stutzen gebildet wird, dessen Wand außen mit der Flüssigkeit in Kontakt steht, dadurch gekennzeichnet, daß das Dämpferelement (21) eine im wesentlichen becherförmige Kappe (22) aufweist, von dessen Mantelfläche (23) mindestens drei rohrförmige Stutzen (24 bis 27) sternförmig nach außen ragen und jeweils einen Strömungskanal (28 bis 31) aufweisen, so daß mindestens zwei zusätzliche Strömungskanäle (29, 30, 31) parallel zum ersten Strömungskanal (28) zwischen Einlaßöffnung (14) und Innenraum (16) des Gehäuses (11) geschaltet sind, daß die Strömungskanäle (28 bis 31) einen im wesentlichen geraden Verlauf aufweisen und daß die Strömungskanäle (28 bis 31) untereinander unterschiedlich lang sind.

2. Dämpfereinrichtung nach Anspruch 1, dadurch gekennzeichnet, daß vorzugsweise 4 bis 8 Strömungskanäle (28 bis 31) angeordnet sind.

3. Dämpfereinrichtung nach Anspruch 1 oder 2, dadurch gekennzeichnet, daß die Querschnitte der Strömungskanäle (28 bis 31) unterschiedlich groß sind und daß insbesondere der größte Querschnitt dem längsten Strömungskanal (28) zugeordnet ist.

4. Dämpfereinrichtung nach einem der Ansprüche 1 bis 3, dadurch gekennzeichnet, daß die rohrförmigen Stutzen (24 bis 27) freitragend in den Innenraum (16) ragen.

5. Dämpfereinrichtung nach einem oder mehreren der vorhergehenden Ansprüche, dadurch gekennzeichnet, daß das aufnehmende Gehäuse (11) ein Teil eines Flüssigkeitsfilters (10) ist, an dessen gegenüberliegenden Stirnseiten (12, 13) die Einlaß- und die Auslaßöffnung (14, 15) angebracht sind und das in seinem Innern einen Filtereinsatz (17) aufnimmt.

6. Dämpfereinrichtung nach Anspruch 5, dadurch gekennzeichnet, daß das Dämpferelement (21) mit seinen Strömungskanälen (28 bis 31) in dem Bereich zwischen einer Stirnseite (12) des Gehäuses (11) und einer Stirnseite (19) des Filtereinsatzes (17), insbesondere auf dessen Einlaßseite (14), angeordnet ist.

7. Dämpfereinrichtung nach einem der Ansprüche 5 und 6, dadurch gekennzeichnet, daß der Filtereinsatz (17) axial durchströmt ist und ein Mittelrohr (18) aufweist.

8. Dämpfereinrichtung nach Anspruch 7, dadurch gekennzeichnet, daß das Dämpferelement (21) in die Abschlußkappe (22) des Mittelrohrs (18) integriert ist.

9. Dämpfereinrichtung nach einem der vorangehenden Ansprüche, dadurch gekennzeichnet, daß das Dämpferelement (21) sich über einen nachgiebigen Dichtungsring (35) am Gehäuse (11) abstützt.

10. Dämpfereinrichtung nach einem oder mehreren der Ansprüche 1 bis 9, dadurch gekennzeichnet, daß auf die rohrförmigen Stutzen deren Strömungskanäle verlängernde, kurze Schlauchstücke aufgesteckt sind.

## Claims

1. Damper device for pulsating liquid flows, in particular for smoothing and reducing pressure vibrations occurring in fuel supply systems for internal combustion engines of motor vehicles, with a closed housing through which liquid flows, which has an inlet and an outlet opening and in which is located a damper element which has a closed flow duct extending from the inlet opening inside the housing, which flow duct is at least partially formed by a tubular mouthpiece whose wall is in contact on the outside with the liquid, characterised in that the damper element (21) has an essentially cup-shaped cap (22) from whose outer surface (23) at least three tubular mouthpieces (24 to 27) protrude outwards in star formation, each with a flow duct (28 to 31), so that at least two additional flow ducts (29, 30, 31) are connected in parallel to the first flow duct (28) between the inlet opening (14) and the internal space (16) of the housing (11), in that the flow ducts (28 to 31) extend essentially in a straight line and in that the flow ducts (28 to 31) are of different lengths relative to one another.

2. Damper device according to Claim 1, characterised in that preferably 4 to 8 flow ducts (28 to 31) are provided.

3. Damper device according to Claim 1 or 2, characterised in that the cross-sections of the flow ducts (28 to 31) are of different sizes and in that, in particular, the largest cross-section is associated with the longest flow duct (28).

4. Damper device according to one of Claims 1 to 3, characterised in that the tubular mouthpieces (24 to 27) protrude as cantilevers into the internal space (16).

5. Damper device according to one or more of the preceding claims, characterised in that the accommodating housing (11) is a part of a liquid filter (10) on whose opposite ends (12, 13) are attached the inlet and outlet openings (14, 15) and which accommodates a filter insert (17) within it.

6. Damper device according to Claim 5, characterised in that the damper element (21) with its flow ducts (28 to 31) is located in the region between an end (12) of the housing (11) and an end (19) of the filter insert (17), in particular on its inlet end (14).

7. Damper device according to Claims 5 and 6, characterised in that the filter insert (17) is subject to axial flow and has a central tube (18).

8. Damper device according to Claim 7, characterised in that the damper element (21) is integrated into the closure cap (22) of the central tube (18).

9. Damper device according to one of the preceding claims, characterised in that the damper element (21) is supported on the housing (11) by means of a flexible sealing ring (35).

10. Damper device according to one or more of Claims 1 to 9, characterised in that short hose pieces are pushed onto the tubular mouthpieces to lengthen their flow ducts.

**Revendications**

1. Dispositif à amortisseur pour courants de liquides à pulsations, en particulier pour le lissage et la réduction des vibrations dues à la pression se produisant dans des systèmes d'alimentation de carburant pour des moteurs à combustion interne de véhicules automobiles, avec un boîtier comprenant un orifice d'entrée et un orifice de sortie, traversé par le liquide et fermé, dans lequel est placé un élément à amortisseur, qui a un canal d'écoulement se développant depuis l'orifice d'entrée à l'intérieur du boîtier, fermé, canal qui est constitué au moins en partie d'un ajutage tubulaire, dont la paroi à l'extérieur est en contact avec le liquide, dispositif à amotisseur caractérisé en ce que l'élément à amortisseur (21) comprend une chape (22) essentiellement en forme de gobelet, sur la face enveloppe (23) de laquelle au moins trois ajutages tubulaires (24 à 27) sont en saillie en formant une étoile vers l'extérieur et comportent chacun un canal d'écoulement (28 à 31), de façon qu'au moins deux canaux additionnels d'écoulement (29, 30, 31) sont branchés en parallèle par rapport au premier canal d'écoulement (28) entre l'orifice d'entrée (14) et la chambre intérieure (16) du boîtier (11), en ce que les canaux d'écoulement (28 à 31) ont un parcours essentiellement rectiligne et que les canaux d'écoulement (28 à 31) ont des longueurs différentes les unes des autres.

2. Dispositif à amortisseur selon la revendication 1, caractérisé en ce qu'on met en place de préférence de 4 à 8 canaux d'écoulement (28 à 31).

3. Dispositif à amortisseur selon les revendications 1 ou 2, caractérisé en ce que les sections transversales des canaux d'écoulement (28) à 31) sont de grandeur différente, et en particulier la section transversale la plus grande est associée au canal d'écoulement (28) le plus long.

4. Dispositif à amortisseur selon les revendications 1 à 3, caractérisé en ce que les ajutages tubulaires (24 à 27) dépassent en porte à faux dans la chambre intérieure (16).

5. Dispositif à amortisseur selon une ou plusieurs des revendications précédentes, caractérisé en ce que le boîtier (11) récepteur est une pièce d'un filtre de liquide (10) et sur ses faces frontales opposées (12, 13) sont disposés les orifices d'entrée et de sortie (14, 15) et en ce qu'il reçoit dans sa partie intérieure une cartouche de filtre (17).

6. Dispositif à amortisseur selon la revendication 5, Caractérisé en ce que l'élément à amortisseur (21) avec ses canaux d'écoulement (28 à 31) est placé dans la zone entre une paroi frontale (12) du boîtier (11) et une paroi frontale (19) de la cartouche de filtre (17), en particulier sur sa face d'entrée (14).

7. Dispositif à amortisseur selon une des revendications 5 et 6, caractérisé en ce que la cartouche de filtre (17) est traversée axialement par le flux et comporte un tube central (18).

8. Dispositif à amortisseur selon la revendication 7, caractérisé en ce que l'élément à amortisseur (21) est intégré dans la chape de fermeture (22) du tuyau central (18).

9. Dispositif à amortisseur selon une des revendications précédentes, caractérisé en ce que l'élément à amortisseur (21) s'appuie sur le boîtier (11) au moyen d'une bague d'étanchéité (35) flexible.

10. Dispositif à amortisseur selon une ou plusieurs des revendications 1 à 9, caractérisé en ce que sur les ajutages tubulaires on enfile de courtes pièces de tuyau prolongeant leurs canaux d'écoulement.

## FIG. 1

## FIG. 2